# EUROPEAN PATENT SPECIFICATION

(11) **EP 4 226 264 B1**
(45) Date of publication and mention of the grant of the patent: **25.11.2026**
(21) Application number: 21801323.3
(22) Date of filing: 04.10.2021
(51) Int. Cl.: G06F 21/10, H04L 9/32, H04L 9/00

(54) **METHOD FOR VERIFYING THE STATE OF A DISTRIBUTED LEDGER AND DISTRIBUTED LEDGER**
VERFAHREN ZUR ÜBERPRÜFUNG DES ZUSTANDS EINES VERTEILTEN KONTOS UND VERTEILTES KONTO
PROCÉDÉ DE VÉRIFICATION DE L'ÉTAT D'UN REGISTRE DISTRIBUÉ ET REGISTRE DISTRIBUÉ

(30) Priority: 05.10.2020 US 202017063297
(43) Date of publication of application: 16.08.2023
(73) Proprietor: THALES DIS CPL USA, INC., Belcamp, MD 21017 (US)
(72) Inventor: LIEPERT, Martin, Belcamp, MD 21017 (US); ZUNKE, Michael, Belcamp, MD 21017 (US)
(74) Representative: Quintero Romero, Manuel
(86) International application number: PCT/US2021/053291
(87) International publication number: WO 2022/076270

(56) References cited:
- US-A1- 2020 117 585
- US-A1- 2020 302 562
- ? ITTAY EYAL ADEM EFE GENCER CORNELL UNIVERSITY EMIN GÜN SIRER ROBBERT VAN RENESSE: "Bitcoin-NG: A Scalable Blockchain Protocol", 16 March 2016 (2016-03-16), pages 52 - 66, XP061024916, Retrieved from the Internet <URL:https://www.usenix.org/sites/default/files/nsdi16_full_proceedings_interior.pdf> [retrieved on 20160316]
- XIAO YANG ET AL: "A Survey of Distributed Consensus Protocols for Blockchain Networks", IEEE COMMUNICATIONS SURVEYS & TUTORIALS, IEEE, USA, vol. 22, no. 2, 28 January 2020 (2020-01-28), pages 1432 - 1465, XP011790758, DOI: 10.1109/COMST.2020.2969706

## Description

### TECHNICAL FIELD

This invention belongs to the field of distributed ledgers, and the methods for verifying the state of the information contained therein.

### STATE OF THE ART

Telecommunication service providers or enterprises usually run multiple software instances from multiple vendors in their environment, such as the Network Function Virtualization (NFV). In a traditional setup of license manager servers and clients, this arrangement requires a considerable effort to install and run different license managers from different vendors and maintain them during their lifecycle. In addition to that, installing new licenses and track and report software usage is often cumbersome.

In order to use software licenses in a distributed system without a central license manager, it is essential that all software instances have a common shared and authenticated state of the associated licenses and their usage.

A common technology to achieve this goal is a so-called distributed ledger. A distributed ledger is a database, which is disturbed and shared between multiple parties, and where any party could extend the database and those changes are distributed to all copies of the database.

Although the proposed distributed ledger technology allows a seamless and secure distribution between participating nodes, there are a few shortcomings in terms of license management & usage recording in a completely virtualized and isolated environment.

First of all, an adversary could clone the distributed ledger, and run a part of the software instances on the original and the other part on the cloned distributed ledger, since a software instance has no way to check if it is running on a cloned distributed ledger or on the original one. Further, the software instance has no means to see if the distributed ledger is still alive (which means that the information of the distributed ledger gets updated with state form other software instances), or it has been frozen (which means that this information is no longer updated).

Article: Ittay Eyal, Adem Efe Gencer, Emin Gün Sirer, and Robbert van Renesse (2020), "Bitcoin-NG: A Scalable Blockchain Protocol", USENIX, pages 52-66; describes a Byzantine fault tolerant blockchain protocol that is robust to extreme churn and shares the same trust model as Bitcoin.

### DESCRIPTION OF THE INVENTION

The invention provides a solution for this problem by means of a method according to claim 1, and a distributed ledger according to claim 15. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a method for verifying the state of a distributed ledger, the method comprising the steps of
creating a chain of data blocks, where each block comprises a signature based at least on information of the previous block;
performing an authentication writing operation in the chain of data blocks, wherein the authentication writing operation comprises authentication information voted by at least one trusted authentication node, creating at least one authentication block; and
checking, by a participating node, the presence of the authentication block, thus considering the information of the distributed ledger as verified and alive until this authentication block.

This method allows the participating nodes to check if the content of a distributed ledger is authentic or not, since the authentication blocks provide a reliable trace of the authentications provided by the trusted authentication nodes.

A participating node is an instance which takes part in the information contained in the distributed ledger. It could be a software instance or any other entity which reads the information of the distributed ledger.

In some particular embodiments, the authentication information is voted by a plurality of trusted authentication nodes.

This increases the security and resilience of the authentication process, since it distributes the authentication duties amongst more than one trusted node, so that if an adversary takes control of a minority of nodes, it is not enough to produce illegitimate authentications. Further, there is a second advantage, related to redundancy. With more than one trusted authentication nodes, the system is able to tolerate a certain number of nodes to fail without ruining the authentication process.

In some particular embodiments, the authentication writing operation comprises the writing of an authentication block if the majority of the trusted authentication nodes vote for it. In different particular embodiments, the authentication writing operation comprises the writing of an authentication block by each one of the trusted authentication nodes, in such a way that when the majority of the trusted authentication nodes have written its authentication block, the authentication writing operation is deemed complete.

The authentication writing operation is the key step of the authentication process. This authentication process needs the majority of the trusted authentication nodes to provide an authentication block. In the first embodiment, there is a single authentication block, which is written only if the majority of trusted authentication nodes vote for it. In the second case, each trusted authentication node writes an authentication block and this action of authenticating is considered as completed when the majority of trusted authentication nodes have written their block. The authentication action has the same effect, validate the content of the distributed ledger which is previous to the authentication action, but may be performed in different ways.

The authentication nodes perform the authentication action, but may or may not perform the verification of previous records. In some embodiments, this verification action is done by participating nodes which are different from the authentication nodes, to perform the validation of the integrity of the generated ledger. For instance, a software vendor may check the integrity of the reported usage records in order to generate correct billing information.

As may be construed, the majority of the trusted authentication nodes is understood as more than the half of the trusted authentication nodes.

In some particular embodiments, each block comprises a header, a payload and a signature, wherein the signature of one block is based at least on the header, the payload and the signature of the previous block. A particular example of this case is that the signature of one block contains a cryptographic checksum over some signature information which contains at least the header, the payload and the signature of the previous block In other embodiments, the signature of one block takes into account the whole previous block or even multiple previous blocks and/or their cryptographic checksums.

This way ensures a correct chain between the blocks.

In some particular embodiments, the step of checking further comprises that a participating node checks if at least the last data block written by the participating node exists in the distributed ledger.

With this embodiment, the participant node may detect if the content is authentic or has been modified or cloned, since the participant node may detect if the last block written by itself has been deleted or not.

In some particular embodiments, at least one of the trusted authentication nodes is a participating node. Thus, if there are participating nodes acting as authentication nodes, the participating nodes will be checking for the presence of their previously written blocks, thus increasing security and preventing rolling back in the distributed ledger.

This means that one of the authentication nodes is not only in charge of the authentication of the ledger, but may play also different roles in the chain of blocks.

In some particular embodiments, the authentication block comprises a time stamp and the authentication writing operation is performed periodically.

A periodical authentication writing operation ensures a good updating frequency, so that the chain of blocks has always a recent authentication update.

In some particular embodiments,
the authentication block does not include a counter value,
the checking step comprises a first checking of the authenticity of a first data block
if the first data block is located after the last authentication block, but has been written before a timeout value has passed from the last authentication block was written, the information of the distributed ledger is considered as verified and alive until this first data block; and
the method includes two consecutive authentication writing operations performed with an authentication writing period which is comprised between 0.5 and 1 times the timeout value.

This method provides a simplified design, since there is no need to provide counters in the blocks. In this case, the information is accepted as valid not only if it is written before the last authentication block, but also if it has been written a short time after the last authentication block. The quantity of this "short time" is provided by the timeout value. The timeout value may be defined in the authentication block or in other element of the ledger, such as a protocol or information contained in the nodes.

In some particular embodiments,
the authentication block does not include a counter value,
the checking step comprises a first checking of the authenticity of a first data block
if the first data block is located after the last authentication block, the checking step comprises a second checking of the authenticity of the first data block after a timeout value; and
the method includes two consecutive authentication writing operations performed with an authentication writing period which is comprised between 0.5 and 1 times the timeout value.

The risk of malicious users is diminished by providing an authentication writing period which is high enough to provide a timely authentication of the information contained in the ledger but low enough to avoid the simultaneous authentication of the real ledger and of a copy thereof.

In some particular embodiments, the authentication block includes a counter value for each trusted authentication node. In further particular embodiments
the checking step comprises a first checking of the authenticity of a first data block
if the first data block is located after the last authentication block, but has been written before a timeout value has passed from the last authentication block was written, the information of the distributed ledger is considered as verified and alive until this first data block; and
the method includes two consecutive authentication writing operations performed with an authentication writing period which is lower than the timeout value.

This embodiment has less strict timing requirements, because a counter can ensure that trusted authentication node is not able to write valid authentication blocks to a second distributed ledger. Therefore, there is no limitation on the minimal time period.

In some particular embodiments, the method further comprises the step of the participating nodes writing data blocks if the step of checking considers the information of the distributed ledger as verified and alive.

The main idea of the invention is that the participating nodes, which may be software instances, may add the software license usage blocks to the chain, and that the trusted authentication nodes authenticate the content thereof. Hence, if the participating node detects that the ledger is authentic and alive, they write some new blocks.

In some particular embodiments, the method further comprises the step of triggering an alarm if the step of checking does not consider the information of the distributed ledger as verified and alive.

It is important that some alarm is triggered if an authentication error is detected, either because there is missing information or because an authentication has not been performed in due time.

The alarm may cause difference consequences: the issuance of a warning, limitations in functionality or direct cease of operation.

In some particular embodiments, there is at least one trustworthy participating node and the step of checking the presence of an authentication block is carried out by the trustworthy participating node, the method further comprising the steps of
if the trustworthy participating node considers the distributed ledger as verified and valid, the trustworthy participating node writes a trusted block
a participating node checks the presence of the last trusted block, thus considering the information of the distributed ledger as verified and alive until this trusted block.

In this embodiment, some specific participating nodes, called trustworthy participating nodes, can extend the timeout beyond the presence of the last authentication block without the need of further authentication nodes to authenticate the ledger. Trustworthy participating nodes verify the existence of a previous entry in the ledger, which has been written after a verification. Hence, the verification of the distributed ledger is extended until this previous entry, even despite no more authentication blocks have been written since then. This technique may be extended by interleaved verification of participating trustworthy nodes.

Provided there is at least always one trustworthy participating node running this technique, the verification threshold can be extended.

In a second inventive aspect, the invention provides a distributed ledger comprising a plurality of chained data blocks, each data block comprising a header, a payload and a signature, wherein
the distributed ledger further comprises at least an authentication block issued by a plurality of trusted authentication nodes, according to a method according to the first inventive aspect
the distributed ledger further comprises at least a participating node, configured to check the authentication time of the last authentication block, thus considering the information of the distributed ledger as verified and alive until this authentication time, according to a method according to the first inventive aspect.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

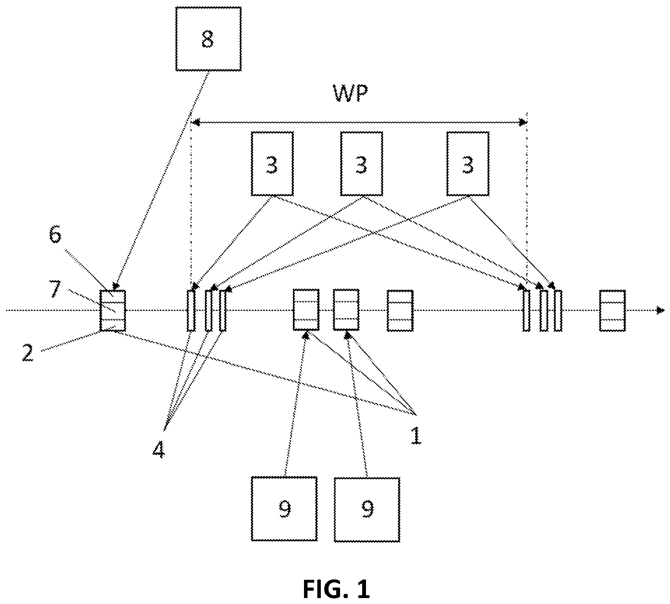

Figure 1 shows a particular embodiment of a chain of blocks which is undergoing a method according to the invention.

In this figure, the following reference numbers are used
- 1: Data block
- 2: Signature
- 3: Trusted authentication node
- 4: Authentication block
- 5: Header
- 6: Payload
- 7: Software instance
- 8: Vendor

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

Figure 1 shows a particular embodiment of a chain of blocks which is undergoing a method according to the invention.

This chain of blocks comprises a plurality of data blocks 1. Each data block 1 comprises a header 5, a payload 6 and a signature 2.

The header 5 is in charge of identifying the type of data block (for example, if the content is related to a license, an usage or an authentication), the creator of such a block (for example, a software instance or a trusted authentication node) and some additional information which may be useful to the security of the chain of blocks (it may include a counter or a time stamp).

The payload 6 includes information which has some value for the final user, such as the license itself or the usage data.

The signature 2 is the main security item of the block, since it is chained to the content of the previous blocks. In this particular embodiment, the signature 2 of one block is a cryptographic checksum over the header 5, the payload 6 and the signature 2 of the previous block 1. Hence, the chain is defined consistently according to the basic principles of chains of blocks, every user has a copy of the chain of blocks so that no user is authorized to change the information of any of them.

This chain of blocks is distributed along a plurality of users. Any of them is able to extend the database, and the system is organized so that the changes are distributed to all copies of the database. Vendors 8 and software instances 7 are two typical examples of entities which may incorporate additional blocks to the chain of blocks.

However, it is not enough that the content of the blocks is protected against an unauthorized modification, it is also necessary to provide a way of authenticating the information contained therein.

To do so, some of the chain of blocks users are called trusted authentication nodes 3. These trusted authentication nodes 3 have the permissions to write authentication blocks 4 to certify that all the information previous to the corresponding authentication block 4 is verified.

There are two main ways of providing such authentication blocks.

The first way, shown in Figure 1, is that every trusted authentication node writes an authentication block. When the majority of the trusted authentication nodes have written an authentication block, the authentication is considered complete. In this simplified embodiment, since there are three trusted authentication nodes 3, when two of them write their authentication block 4, the authentication process is deemed complete.

In an alternative embodiment, not shown in the figure, every trusted authentication node has a vote, instead of writing a block. When the majority of trusted authentication nodes have voted for the authentication, a single authentication block is written in the chain.

In any of those cases, the majority will be understood as a number greater than the half of the number of trusted authentication nodes. In other words, it is enough that there are more trusted authentication nodes voting for the authentication (or writing their authentication blocks) that authentication nodes which do not.

The result is the same: the majority of the trusted authentication nodes is needed to authenticate all the information which is contained in the block until the authentication block is written.

Regarding the authenticity verification, when a software instance wants to verify if a license and usage block is authentic, the software instance verifies if the license and usage block is followed by an authentication block. If there is a posterior authentication block, the information of the license and usage block is deemed valid.

If not, there are two options. The information of the block may have not been authenticated yet so, in a first option, the software instance just checks if the license and usage block has been written before or after the timeout value from the last authentication block. If it has been written before, it is deemed valid, but if it has been written after, an alarm is triggered, since this embodiment requires that the authentication blocks are written periodically according to an authentication writing period. In a second option, instead of just considering the block written before the timeout value as valid, a second check is performed.

The software instances also check if all the blocks previously written by themselves are still present in the chain of blocks or not, in order to check if the chain of blocks has been partially cloned or not.

If this verification steps are successful, the information of the chain of blocks is considered as verified and alive, so the software instances may write new blocks.

On the contrary, if something unexpected is found, an alarm is triggered, which may cause different consequences, from a mere warning issuance to the complete cease of the operation, also considering a limitation in its functionality.

Regarding the authentication control, there are two main alternatives.

The first one considers the use of a simple system, without including counters in the headers of the blocks. To compensate the lack of counters, some operation periods are carefully chosen.

In these embodiments, a timeout value is defined. Further, an authentication writing period WP is defined as the time between two consecutive authentication writings. The authentication writing period WP must be always lower than the timeout value, so that the software instances have a way of knowing if there has been too much time since the last authentication writing: if the timeout value is one hour and the last authentication block was written more than one hour ago, this ledger is allegedly not alive.

But in this case of no counters, the authentication nodes are configured so that the authentication writing period is greater than 0.5 times the timeout value, to reduce the possibility that the authentication nodes may authenticate two different ledgers (the original one and the copied one).

The software instance may check if a software license and usage block is valid. To do so, it checks the time of the last authentication block. If the timeout value for the chain of blocks is one hour and the last authentication took place 45 minutes ago, there are two options. In a simplified model, since the time is lower than the timeout value, it may deem it as valid and write the new block. In a more complex embodiment, the software instance may perform a second check 20 minutes later, to check whether, after the timeout value has expired, there has been a new authentication block (and hence confirm the validity of the content) or not (then triggering an alert of timeout value expired without new authentications).

The second alternative comprises the use of a counter in the header of the corresponding block.

This alternative allows the trusted authentication nodes to check for their previous authentication block in the ledger, providing an additional security check, since the content of the chain of blocks is considered valid only if it sees its previous authentication block in the chain of blocks. This prevents a malicious operator from presenting multiple ledgers (e.g. the original one and a cloned one) authenticated by the trusted authentication nodes.

With this approach, the requirement of an authentication timing is less strict. However, it still requires the trusted authentication nodes to keep the counter of the last authentication, and a check is needed if the last authentication block is indeed present in the chain of blocks.

Trusted authentication nodes could be common for all software vendors, and are trusted by all software vendors. The trusted authentication nodes could also be provided by the software vendors themselves. In this case, the software instances verify only the authentication blocks written by its own trusted authentication nodes.

The trusted authentication nodes could be part of the service provider's network. In this case, it consists preferably of trusted hardware (e.g. HSM = Hardware security modules), or a trusted software implementation.

If the trusted authentication nodes are provided by a third party, then this third party providers need be trusted by both the software vendor and service provider. They need to have a way to verify its proper operation (e.g. by audits).

The software vendor writes software license usage information to the chain of blocks and reads usage information from it. The software vendor might have direct access to the chain of blocks or write and read it via the service provider.

Software instances are able to calculate the actual available licenses by balancing the originally available licenses against already consumed licenses by other software instances.

The software instances themselves constantly check, if there is a periodic Authentication Block in the distributed ledger by a majority of trusted authentication nodes. If the authentication is missed for longer than the authentication writing period, then the software instances will detect a timeout.

In some cases, there is at least one trustworthy participating node and the step of checking the presence of an authentication block is carried out by the trustworthy participating node, the method further comprising the steps of
if the trustworthy participating node considers the distributed ledger as verified and valid, the trustworthy participating node writes a trusted block
a participating node checks the presence of the last trusted block, thus considering the information of the distributed ledger as verified and alive until this trusted block.

In this embodiment, some specific participating nodes, called trustworthy participating nodes, can extend the timeout beyond the presence of the last authentication block without the need of further authentication nodes to authenticate the ledger. Trustworthy participating nodes verify the existence of a previous entry in the ledger, which has been written after a verification. Hence, the verification of the distributed ledger is extended until this previous entry, even despite no more authentication blocks have been written since then. This technique may be extended by interleaved verification of participating trustworthy nodes. Provided there is at least always one trustworthy participating node running this technique, the verification threshold can be extended.

In addition to that, the software instances are also appending software license usage information to the distributed ledger. Before appending a new usage record, they need to ensure, that they are able to see their previously written records. This could for example be achieved by a counter and/or timestamp value added to the usage record, and to remember at least the previously written counter and/or timestamp.

For a proper privacy isolation between software vendors, it would be possible to encrypt the license and usage information individually for each vendor. Encryption should be done in such a way, that it is not even possible to identify the software vendor for the encrypted packages - only the software vendor itself can detect his own entries and decrypt them.

## Claims

1. Method for verifying the authenticated state of a distributed ledger, the method comprising the steps of
creating a chain of data blocks, where each block (1) comprises a signature (2) which is based at least on information of the previous block (1);
performing an authentication writing operation in the chain of data blocks, wherein the authentication writing operation comprises the creation of an authentication block (4) with authentication information certifying that all the information previous to the corresponding authentication block (4) is verified and voted by at least one trusted authentication node (3) wherein the authentication block (4) comprises a time stamp and the authentication writing operation is performed periodically; and
checking, by a participating node (7), the presence of the authentication block (4), wherein
the authentication block (4) does not include a counter value;
the checking step comprises a first checking of the authenticity of a first data block (1);
if the first data block (1) is located after the last authentication block (4), but has been written before a timeout value has passed from the last authentication block (4) was written, the information of the distributed ledger is considered as verified and alive until this first data block (1); and
the method includes two consecutive authentication writing operations performed with an authentication writing period which is comprised between 0.5 and 1 times the timeout value thus considering the information of the distributed ledger as verified and alive until this authentication block (4).

2. Method according to claim 1, wherein the authentication information is voted by a plurality of trusted authentication nodes (3).

3. Method according to claim 2, wherein the authentication writing operation comprises the writing of an authentication block (4) if the majority of the trusted authentication nodes (3) vote for it.

4. Method according to claim 2, wherein the authentication writing operation comprises the writing of an authentication block (4) by each one of the trusted authentication nodes (3), in such a way that when the majority of the trusted authentication nodes have written its authentication block, the authentication writing operation is deemed complete.

5. Method according to any of the preceding claims, wherein each block comprises a header (5), a payload (6) and a signature (2), wherein the signature (2) of one block is based at least on the header (5), the payload (6) and the signature (2) of the previous block (1).

6. Method according to any of the preceding claims, wherein the step of checking further comprises that a participating node (7) checks if at least the last data block written by the participating node (7) exists in the distributed ledger.

7. Method according to any of the preceding claims, wherein at least one of the trusted authentication nodes is a participating node.

8. Method according to claim 1, wherein
the authentication block (4) does not include a counter value;
the checking step comprises a first checking of the authenticity of a first data block (1);
if the first data block (1) is located after the last authentication block (4), the checking step comprises a second checking of the authenticity of the first data block (1) after a timeout value; and
the method includes two consecutive authentication writing operations performed with an authentication writing period which is comprised between 0.5 and 1 times the timeout value.

9. Method according to any of claims 1 to 7, wherein
the authentication block includes a counter value for each trusted authentication node (3)
the checking step comprises a first checking of the authenticity of a first data block (1);
if the first data block (1) is located after the last authentication block (4), but has been written before a timeout value has passed from the last authentication block (4) was written, the information of the distributed ledger is considered as verified and alive until this first data block (1); and
the method includes two consecutive authentication writing operations performed with an authentication writing period which is lower than the timeout value.

10. Method according to any of the preceding claims, wherein the distributed ledger comprises at least one trustworthy participating node and the step of checking the presence of an authentication block is carried out by the trustworthy participating node, the method further comprising the steps of
if the trustworthy participating node considers the distributed ledger as verified and valid, the trustworthy participating node writes a trusted block
a participating node checks the presence of the last trusted block, thus considering the information of the distributed ledger as verified and alive until this trusted block.

11. Method according to any of the preceding claims, further comprising the step of the participating nodes writing data blocks if the step of checking considers the information of the distributed ledger as verified and alive.

12. Method according to any of the preceding claims, further comprising the step of triggering an alarm if the step of checking does not consider the information of the distributed ledger as verified and alive.

13. Distributed ledger comprising a plurality of chained data blocks, each data block comprising a header, a payload and a signature, wherein
the distributed ledger further comprises at least an authentication block issued by a plurality of trusted authentication nodes, according to a method according any of the preceding claims; and
wherein the distributed ledger further comprises at least a participating node, configured to carry out the checks according to a method according to any of the preceding claims.

## Patentansprüche

1. Verfahren zum Verifizieren des authentifizierten Zustands eines verteilten Ledgers, wobei das Verfahren die Schritte umfasst
Erzeugen einer Kette von Datenblöcken, wobei jeder Block (1) eine Signatur (2) umfasst, die mindestens auf Informationen des vorherigen Blocks (1) basiert;
Durchführen eines Authentifizierungsschreibvorgangs in der Kette von Datenblöcken, wobei der Authentifizierungsschreibvorgang die Erstellung eines Authentifizierungsblocks (4) mit Authentifizierungsinformationen umfasst, die bescheinigen, dass alle Informationen vor dem entsprechenden Authentifizierungsblock (4) durch mindestens einen vertrauenswürdigen Authentifizierungsknoten (3) verifiziert sind und darüber abgestimmt wurde, wobei der Authentifizierungsblock (4) einen Zeitstempel umfasst und der Authentifizierungsschreibvorgang periodisch durchgeführt wird; und
Prüfen, durch einen teilnehmenden Knoten (7), des Vorhandenseins des Authentifizierungsblocks (4), wobei
der Authentifizierungsblock (4) keinen Zählerwert einschließt;
der Prüfschritt ein erstes Prüfen der Authentizität eines ersten Datenblocks (1) umfasst;
wenn sich der erste Datenblock (1) hinter dem letzten Authentifizierungsblock (4) befindet, aber geschrieben wurde, bevor ein Zeitüberschreitungswert abgelaufen ist, seit der letzte Authentifizierungsblock (4) geschrieben wurde, die Informationen des verteilten Ledgers bis zu diesem ersten Datenblock (1) als verifiziert und aktiv betrachtet werden; und
das Verfahren zwei aufeinanderfolgende Authentifizierungsschreibvorgänge einschließt, die mit einer Authentifizierungsschreibperiode durchgeführt werden, die zwischen dem 0,5- und 1-Fachen des Zeitüberschreitungswerts liegt, wodurch die Informationen des verteilten Ledgers bis zu diesem Authentifizierungsblock (4) als verifiziert und aktiv betrachtet werden.

2. Verfahren nach Anspruch 1, wobei durch eine Vielzahl von vertrauenswürdigen Authentifizierungsknoten (3) über die Authentifizierungsinformationen abgestimmt wird.

3. Verfahren nach Anspruch 2, wobei der Authentifizierungsschreibvorgang das Schreiben eines Authentifizierungsblocks (4) umfasst, wenn die Mehrheit der vertrauenswürdigen Authentifizierungsknoten (3) dafür stimmt.

4. Verfahren nach Anspruch 2, wobei der Authentifizierungsschreibvorgang das Schreiben eines Authentifizierungsblocks (4) durch jeden der vertrauenswürdigen Authentifizierungsknoten (3) umfasst, sodass, wenn die Mehrheit der vertrauenswürdigen Authentifizierungsknoten ihren Authentifizierungsblock geschrieben hat, der Authentifizierungsschreibvorgang als abgeschlossen gilt.

5. Verfahren nach einem der vorstehenden Ansprüche, wobei jeder Block einen Header (5), eine Nutzlast (6) und eine Signatur (2) umfasst, wobei die Signatur (2) eines Blocks mindestens auf dem Header (5), der Nutzlast (6) und der Signatur (2) des vorherigen Blocks (1) basiert.

6. Verfahren nach einem der vorstehenden Ansprüche, wobei der Schritt des Prüfens ferner umfasst, dass ein teilnehmender Knoten (7) prüft, ob mindestens der letzte durch den teilnehmenden Knoten (7) geschriebene Datenblock in dem verteilten Ledger vorhanden ist.

7. Verfahren nach einem der vorstehenden Ansprüche, wobei mindestens einer der vertrauenswürdigen Authentifizierungsknoten ein teilnehmender Knoten ist.

8. Verfahren nach Anspruch 1, wobei
der Authentifizierungsblock (4) keinen Zählerwert einschließt;
der Prüfschritt ein erstes Prüfen der Authentizität eines ersten Datenblocks (1) umfasst;
wenn sich der erste Datenblock (1) hinter dem letzten Authentifizierungsblock (4) befindet, der Prüfschritt ein zweites Prüfen der Authentizität des ersten Datenblocks (1) nach einem Zeitüberschreitungswert umfasst; und
das Verfahren zwei aufeinanderfolgende Authentifizierungsschreibvorgänge einschließt, die mit einer Authentifizierungsschreibperiode durchgeführt werden, die zwischen dem 0,5- und 1-Fachen des Zeitüberschreitungswerts liegt.

9. Verfahren nach einem der Ansprüche 1 bis 7, wobei
der Authentifizierungsblock einen Zählerwert für jeden vertrauenswürdigen Authentifizierungsknoten (3) einschließt
der Prüfschritt ein erstes Prüfen der Authentizität eines ersten Datenblocks (1) umfasst;
wenn sich der erste Datenblock (1) hinter dem letzten Authentifizierungsblock (4) befindet, aber geschrieben wurde, bevor ein Zeitüberschreitungswert abgelaufen ist, seit der letzte Authentifizierungsblock (4) geschrieben wurde, die Informationen des verteilten Ledgers bis zu diesem ersten Datenblock (1) als verifiziert und aktiv betrachtet werden; und
das Verfahren zwei aufeinanderfolgende Authentifizierungsschreibvorgänge einschließt, die mit einer Authentifizierungsschreibperiode durchgeführt werden, die kleiner als der Zeitüberschreitungswert ist.

10. Verfahren nach einem der vorstehenden Ansprüche, wobei das verteilte Ledger mindestens einen vertrauenswürdigen teilnehmenden Knoten umfasst und der Schritt des Prüfens des Vorhandenseins eines Authentifizierungsblocks durch den vertrauenswürdigen teilnehmenden Knoten ausgeführt wird, wobei das Verfahren ferner die Schritte umfasst
wenn der vertrauenswürdige teilnehmende Knoten das verteilte Ledger als verifiziert und gültig betrachtet, der vertrauenswürdige teilnehmende Knoten einen vertrauenswürdigen Block schreibt
ein teilnehmender Knoten das Vorhandensein des letzten vertrauenswürdigen Blocks prüft und somit die Informationen des verteilten Ledgers bis zu diesem vertrauenswürdigen Block als verifiziert und aktiv betrachtet.

11. Verfahren nach einem der vorstehenden Ansprüche, das ferner den Schritt des Schreibens von Datenblöcken durch die teilnehmenden Knoten umfasst, wenn der Schritt des Prüfens die Informationen des verteilten Ledgers als verifiziert und aktiv betrachtet.

12. Verfahren nach einem der vorstehenden Ansprüche, das ferner den Schritt des Auslösens eines Alarms umfasst, wenn der Schritt des Prüfens die Informationen des verteilten Ledgers nicht als verifiziert und aktiv betrachtet.

13. Verteiltes Ledger, das eine Vielzahl von verketteten Datenblöcken umfasst, wobei jeder Datenblock einen Header, eine Nutzlast und eine Signatur umfasst, wobei
das verteilte Ledger ferner mindestens einen Authentifizierungsblock umfasst, der durch eine Vielzahl von vertrauenswürdigen Authentifizierungsknoten gemäß einem Verfahren nach einem der vorstehenden Ansprüche ausgegeben wird; und
wobei das verteilte Ledger ferner mindestens einen teilnehmenden Knoten umfasst, der konfiguriert ist, um die Prüfungen gemäß einem Verfahren nach einem der vorstehenden Ansprüche auszuführen.

## Revendications

1. Procédé permettant de vérifier l'état authentifié d'un registre distribué, le procédé comprenant les étapes consistant à
créer une chaîne de blocs de données, où chaque bloc (1) comprend une signature (2) qui est basée au moins sur des informations du bloc précédent (1) ;
réaliser une opération d'écriture d'authentification dans la chaîne de blocs de données, dans lequel l'opération d'écriture d'authentification comprend la création d'un bloc d'authentification (4) avec des informations d'authentification certifiant que toutes les informations antérieures au bloc d'authentification (4) correspondant sont vérifiées et votées par au moins un nœud d'authentification de confiance (3), dans lequel le bloc d'authentification (4) comprend une estampille temporelle et l'opération d'écriture d'authentification est réalisée périodiquement ; et
contrôler, par un nœud participant (7), la présence du bloc d'authentification (4), dans lequel
le bloc d'authentification (4) ne comporte pas de valeur de compteur ;
l'étape de contrôle comprend un premier contrôle de l'authenticité d'un premier bloc de données (1) ;
si le premier bloc de données (1) est situé après le dernier bloc d'authentification (4), mais a été écrit avant qu'une valeur de temporisation ne se soit écoulée depuis l'écriture du dernier bloc d'authentification (4), les informations du registre distribué sont considérées comme vérifiées et actives jusqu'à ce premier bloc de données (1) ; et
le procédé comporte deux opérations d'écriture d'authentification consécutives réalisées avec une période d'écriture d'authentification qui est comprise entre 0,5 et 1 fois la valeur de temporisation, considérant ainsi les informations du registre distribué comme vérifiées et actives jusqu'à ce bloc d'authentification (4).

2. Procédé selon la revendication 1, dans lequel les informations d'authentification est votée par une pluralité de nœuds d'authentification de confiance (3).

3. Procédé selon la revendication 2, dans lequel l'opération d'écriture d'authentification comprend l'écriture d'un bloc d'authentification (4) si la majorité des nœuds d'authentification de confiance (3) votent pour celle-ci.

4. Procédé selon la revendication 2, dans lequel l'opération d'écriture d'authentification comprend l'écriture d'un bloc d'authentification (4) par chacun des nœuds d'authentification de confiance (3), de telle sorte que lorsque la majorité des nœuds d'authentification de confiance ont écrit leur bloc d'authentification, l'opération d'écriture d'authentification est considérée comme terminée.

5. Procédé selon l'une quelconque des revendications précédentes, dans lequel chaque bloc comprend un en-tête (5), une charge utile (6) et une signature (2), dans lequel la signature (2) d'un bloc est basée au moins sur l'en-tête (5), la charge utile (6) et la signature (2) du bloc précédent (1).

6. Procédé selon l'une quelconque des revendications précédentes, dans lequel l'étape de contrôle comprend en outre le fait qu'un nœud participant (7) contrôle si au moins le dernier bloc de données écrit par le nœud participant (7) existe dans le registre distribué.

7. Procédé selon l'une quelconque des revendications précédentes, dans lequel au moins l'un des nœuds d'authentification de confiance est un nœud participant.

8. Procédé selon la revendication 1, dans lequel
le bloc d'authentification (4) ne comporte pas de valeur de compteur ;
l'étape de contrôle comprend un premier contrôle de l'authenticité d'un premier bloc de données (1) ;
si le premier bloc de données (1) est situé après le dernier bloc d'authentification (4), l'étape de contrôle comprend un second contrôle de l'authenticité du premier bloc de données (1) après une valeur de temporisation ; et
le procédé comporte deux opérations d'écriture d'authentification consécutives réalisées avec une période d'écriture d'authentification qui est comprise entre 0,5 et 1 fois la valeur de temporisation.

9. Procédé selon l'une quelconque des revendications 1 à 7, dans lequel
le bloc d'authentification comporte une valeur de compteur pour chaque nœud d'authentification de confiance (3)
l'étape de contrôle comprend un premier contrôle de l'authenticité d'un premier bloc de données (1) ;
si le premier bloc de données (1) est situé après le dernier bloc d'authentification (4), mais a été écrit avant qu'une valeur de temporisation ne se soit écoulée depuis l'écriture du dernier bloc d'authentification (4), les informations du registre distribué sont considérées comme vérifiées et actives jusqu'à ce premier bloc de données (1) ; et
le procédé comporte deux opérations d'écriture d'authentification consécutives réalisées avec une période d'écriture d'authentification qui est inférieure à la valeur de temporisation.

10. Procédé selon l'une quelconque des revendications précédentes, dans lequel le registre distribué comprend au moins un nœud participant de confiance et l'étape consistant à contrôler la présence d'un bloc d'authentification est réalisée par le nœud participant de confiance, le procédé comprenant en outre les étapes suivantes
si le nœud participant de confiance considère le registre distribué comme vérifié et valide, le nœud participant de confiance écrit un bloc de confiance
un nœud participant contrôle la présence du dernier bloc de confiance, considérant ainsi les informations du registre distribué comme vérifiées et actives jusqu'à ce bloc de confiance.

11. Procédé selon l'une quelconque des revendications précédentes, comprenant en outre l'étape consistant à écrire des blocs de données par les nœuds participants si l'étape de contrôle considère les informations du registre distribué comme vérifiées et actives.

12. Procédé selon l'une quelconque des revendications précédentes, comprenant en outre l'étape consistant à déclencher une alarme si l'étape de contrôle ne considère pas les informations du registre distribué comme vérifiées et actives.

13. Registre distribué comprenant une pluralité de blocs de données chaînés, chaque bloc de données comprenant un en-tête, une charge utile et une signature, dans lequel
le registre distribué comprend en outre au moins un bloc d'authentification émis par une pluralité de nœuds d'authentification de confiance, selon un procédé selon l'une quelconque des revendications précédentes ; et
dans lequel le registre distribué comprend en outre au moins un nœud participant, configuré pour effectuer les contrôles selon un procédé selon l'une quelconque des revendications précédentes.
